# EUROPEAN PATENT SPECIFICATION

(11) **EP 4 141 890 B1**
(45) Date of publication and mention of the grant of the patent: **23.04.2025**
(21) Application number: 21940028.0
(22) Date of filing: 31.05.2021
(51) Int. Cl.: G21C 3/07, G21C 3/18, G21C 3/28

(54) **FUEL ELEMENT FOR A WATER-COOLED WATER-MODERATED NUCLEAR REACTOR**
BRENNSTAB EINES WASSERGEKÜHLTEN WASSERMODERIERTEN KERNREAKTORS
PASTILLE DE COMBUSTIBLE POUR RÉACTEUR NUCLÉAIRE À CALOPORTEUR ET MODÉRATEUR EAU (VVER)

(43) Date of publication of application: 01.03.2023
(73) Proprietor: Joint-Stock Company "TVEL", Moscow 115409 (RU)
(72) Inventor: NOVIKOV, Vladimir Vladimirovich, 123458 Moscow (RU); KUZNETSOV, Vladimir Ivanovich, 123098 Moscow (RU); MIKHEEV, Evgeniy Nikolaevich, 127299 Moscow (RU); GIZATULLIN, Timur Tagirovich, Kuluevo (RU); SERGIENKO, Ivan Romanovich, Novomoskovsk (RU); LYSIKOV, AAleksandr Vladimirovich, 111674 Moscow (RU)
(74) Representative: Yalçiner Patent and Consulting Ltd.
(86) International application number: PCT/RU2021/000231
(87) International publication number: WO 2022/255899

(56) References cited:
- CN-A- 107 993 728
- CN-U- 207 572 069
- RU-C1- 2 748 538
- RU-C1- 2 748 538
- RU-C2- 2 241 262
- RU-C2- 2 241 262
- RU-C2- 2 389 088
- RU-C2- 2 389 088
- DOUKHOVENSKI A S ET AL: "MODERNIZATION OF THE FUEL CHARACTERISTICS IF THE WWER-440 AND THE WWER-1000 TYPE REACTORS BY FUEL ROD DIAMETERS REDUCING", TOPFUEL. INTERNATIONAL TOPICAL MEETING, XX, XX, vol. 1, 9 June 1997 (1997-06-09), pages 256 - 264, XP000996730

## Description

The invention relates to nuclear engineering and involves improvement of the design of fuel elements as part of an advanced fuel assemblies (FA) that make up the core in a water-cooled vessel-type nuclear reactor of increased capacity, particularly VVER-1000. In particular, the invention relates to TBCA-T.mod.2, a new modification of fuel assemblies, and can be used at Temelin NPP.

Prospects for the development of nuclear power are largely determined by an increase in the level of the cost efficiency. The problem of the cost efficiency increase at the operating NPPs with pressurized water reactors (VVER) has various solutions. One of the most conservative solutions is to minimize modification in the structural elements of the core. This approach ensures a more efficient use of the available resources, without recourse to any significant adjustment of the processes in manufacturing of the structural components.

At present, fuel rods are used in VVER nuclear reactors. A fuel rod has a fuel column consisting of individual cylindrical pellets located in the cladding, which is a load-bearing structural component (see A.G. Samoilov, Fuel Rods for Nuclear Reactors. Moscow, Energoatomizdat, 1985, p. 99-107 - /1/). The diameter of fuel rods is assumed to be as small as possible in order to enlarge the heat exchange surface and to reduce thermal stresses caused by temperature differential, and in the real designs of pressurized water reactors it varies from 7.35·10⁻³ m to 15·10⁻³ m (see G. N. Ushakov, Pressure Tubes and Fuel Rods of Nuclear Reactors. Moscow, Energoizdat, 1981, p. 32-36 - /2/). The design of fuel rods, FAs and the core itself for VVER reactors shall ensure mechanical stability and strength of fuel rods, particularly under emergency conditions with high temperatures.

A fuel rod of a pressurized water reactor is known (RF patent No. 2244347, IPC G21C 3/00, published on 10/01/2005 - /3/), containing a leak-tight cylindrical cladding and nuclear fuel in the form of cylindrical pellets arranged in a column along the cladding length. The outer diameter of the fuel rod cladding is selected to be 7.00·10⁻³m to 8.79·10⁻³m, and the fuel column has the diameter of 5.82·10⁻³ m to 7.32·10⁻³ m and the weight of 0.93 kg to 1.52 kg. Fuel pellets may be solid, or may have central holes with the diameter of 1.07-10⁻³m to 1.45·10⁻³m. Pressed and sintered uranium dioxide and/or plutonium dioxide is used as the material for fuel pellets; thorium oxide, uranium carbides or their mixtures may also be used. The weight of uranium in the fuel rods is 0.82 to 1.34 kg. The ratio between the fuel column length and the fuel rod length is 0.9145 to 0.9483.

The disadvantage of the fuel element disclosed in /3/ is that the outer diameter of the fuel element cladding varies from 7.00.10⁻³m to 8.79·10⁻³ m, resulting in significant adjustment of the manufacturing technology for all fuel element components, which complicates the manufacturing technology in comparison with the existing one. Another disadvantage is the low fuel weight - from 0.93 kg to 1.52 kg.

A fuel element for a water-cooled power nuclear reactor is known (see source RU 2 748 538 C1, published 05.26.2021, /4/).

The difference between the proposed fuel rod and /4/ lies in the technical purpose of the fuel rods. Document /4/ relates to the field of nuclear engineering, namely to fuel rods of the reactor WWER 1200. The fuel rod according to the present invention relates to nuclear engineering and concerns the improvement of the design of fuel elements (fuel rods) that are part of a modernized fuel assembly (FA), from which the core is assembled in a water-cooled vessel nuclear reactor of high fuel loading, namely WWER-1000.

Document /4/ describes a fuel element comprising a fuel column concentrically placed in a cylindrical cladding assembled from fuel pellets with a central hole, while the present invention proposes the fuel column to be assembled of solid pellets without a central hole, which may contain chamfers and holes. Furthermore, document /4/ (see dependent claim 10), the inert atmosphere inside the fuel element can consist of helium with a mass ratio in the final product in the range from 90 to 99%, while the proposed fuel element comprises at least 99% of helium.

The differences described above allow to solve the technical problem how to increase efficiency of a water-water energetic reactor due to increased energy production from the higher specific uranium content of the fuel element relative to the existing fuel elements used in reactors WWER-1000 and WWER-1200 (see document /4/) with holed tablets and having a nominal outer diameter of 7.6 mm.

Furthermore, present invention proposes using the E110M alloy for the cladding (from 0.9 to 1.1 wt.% niobium, from 0.07 to 0.15 wt.% iron, from 0.1 to 0.15 wt.% oxygen, up to 0.01 wt.% hafnium, the balance of zirconium and impurities), which allows to increase the efficiency of a water-water energetic reactor by increasing energy production due to the reduced amount of hafnium in the cylindrical cladding material, which absorbs neutrons necessary for the fission of Uranium-235.

The proposed alloy used for a cladding with a thickness of 0.585 mm and under increased pressure of the inert gas inside the fuel rod of 2.7 MPa, makes it possible to maintain the reliability and safety of the proposed fuel rod.

Document /4/ describes a retaining spring comprising compensating group coils of and fixing group coils. The present invention proposes using fuel element with a retaining spring having additional buffer coils having a less pitch than the compensating group coils. Buffer coils ensure correct installation of the retaining spring in the fuel rod without damaging the compensating group coils by the installation force, which increases the reliability and safety of the proposed fuel rod.

The fuel column of the present invention consists of an upper blanket part, an active part, and a lower blanket part, where the fuel pellets of the active part of the fuel column are made of uranium dioxide with from 0.1 to 5% wt. of Uranium-235, and the fuel pellets of the upper blanket part and lower blanket part of the fuel column are made of uranium dioxide comprising less Uranium-235 than in the active part. Taking into account the higher uranium intensity this ensures that reliability and safety of the proposed fuel rod are maintained due to energy release profiling.

Another retaining spring for fuel columns of a fuel assembly fuel rods is known (see RU 2 389 088 C2, published 05/10/2010, document /5/).

The fuel rod of the present invention differs from that disclosed in the document /5/ by some of the characteristics. The retaining spring described the document /5/ is made as a cylindrical spring having sequentially arranged compensating, buffer, and fixing groups of coils, and the outer diameter of the buffer group coils is larger than the inner diameter of the fixing group coils, and the outer diameter of the buffer group coils is less than the outer diameter, but larger than the inner diameter of the compensating group coils.

The fuel element of the present invention has no limitations on the ratio of the internal or external diameters of groups of coils of the retaining spring. Moreover, the fuel element of the present invention has a polished lower coil of the compensating group to increase the contact area with the upper end of the fuel column. These features increase the reliability and safety of the proposed fuel element.

Designs of an active zone of a water-water energetic reactors are described in the state of the art, especially for nuclear reactors of the WWER-440 type (see, for example, RU 2 241 262 C2, published on November 27, 2004, document /6/).

The proposed fuel rod differs from the teachings of the document /6/ by the technical purpose and use area of the fuel rods. The proposed invention is developed to improve the conventional design of fuel elements to create a modernized fuel assembly (FA) comprising the core in a water-cooled vessel nuclear reactor with an increased fuel load, namely, WWER-1000.

The technical solution disclosed in the document /6/ also has limitations for the outer diameter of the fuel rods, which should fall within the ranges, mm: from 7 to 8; from 7.8 to 8.79; from 7 to 7.9; from 7.9 to 8.7; from 7.1 to 7.8; from 8 to 8.6; from 7.2 to 7.7; from 8.1 to 8.5; from 7.6 to 8; from 8.4 to 8.79; from 7.5 to 7.9; from 8.3 to 8.7 with internal diameter, mm: from 5.94 to 6.79; from 6.62 to 7.47; from 5.94 to 6.70; from 6.7 to 7.38; from 6.02 to 6.62; from 6.79 to 7.3; from 6.11 to 6.53; from 6.87 to 7.21; from 6.45 to 6.79; from 7.13 to 7.47; from 6.36 to 6.7; from 7.04 to 7.38, respectively, applicable for the various numbers of fuel rods contained in the fuel assembly. To the contrary, the fuel rod of the present invention has the outer diameter of 9.10±0.04 mm (from 9.06 to 9.14 mm), and the cladding wall thickness is 0.585±0.05 mm, which corresponds to the internal diameter in the range from 7.87 to 7, 99 mm. Thus, the geometric dimensions disclosed in the document /6/ in terms of outer and inner diameters differ from the fuel element of the present invention.

The use of unambiguous values of the outer diameter and wall thickness in the fuel element of the present invention unifies their manufacturing process, thereby increasing reliability and ensuring safe operation.

Contrary to the teachings of the document /6/, an alloy E110 of the high purity grade is used in the proposed fuel element as a material of the cladding (having a composition of from 0.9 to 1.1 wt.% niobium, from 0.04 to 0.07 wt.% iron, from 0.07 to 0.01 wt.% oxygen, up to 0.01 wt.% hafnium, the balance is zirconium and impurities) or E110M (from 0.9 to 1.1 wt.% niobium, from 0.07 to 0.15 wt.% iron, from 0.1 to 0.15 wt.% oxygen, up to 0.01 wt.% hafnium, the balance is zirconium and impurities). Due to the reduced amount of hafnium in the cylindrical cladding material, which absorbs neutrons necessary for the fission of Uranium-235, energy production increases and, as a result, the efficiency of a pressurized water nuclear power reactor increases.

Furthermore, using the proposed alloy, taking into account the thinned 0.585 mm cladding and increased pressure of 2.7 MPa, makes it possible to maintain the reliability and safety of the proposed fuel element.

In accordance with the geometric dimensions of the fuel element disclosed in /6/, their fuel pellets (with or without a central hole) have smaller sizes than in the fuel element of the present invention. The proposed fuel element comprises solid fuel pellets with an outer diameter of 7.8±0.03 mm, a height of 11±1 mm, and a total weight of fuel pellets of 1825±20 g, which allows for a larger fuel load, which leads to greater energy production and, accordingly, increased efficiency.

The fuel column of the present invention comprises an upper blanket part, an active part, and a lower blanket part arranged one after another, while the fuel pellets of the active part of the fuel column are made of uranium dioxide with from 0.1 to 5% wt. of Uranium-235, and the fuel pellets of the upper blanket part and lower blanket part of the fuel column are made of uranium dioxide comprising less Uranium-235 than in the active part. This ensures that the reliability and safety of the proposed fuel rod is maintained taking into account the higher uranium intensity due to energy release profiling.

Contrary to the teachings of the document /6/, the retaining spring is used in the fuel element of the present invention, that is made in the form of a cylindrical spring capable to press the fuel column against the lower plug in the axial direction, and the retaining spring is comprised of parts arranged one after another from the top of the fuel column, namely, compensating group coils, buffer coils, and fixing group coils. The compensating group coils of the retaining spring are configured to provide the required axial force for pressing the fuel column to maintain the fuel column integrity and reliability. The buffer coils ensure correct installation of the retaining spring in the fuel rod, while the coils of the compensating group are not damaged by the installation force, which increases the reliability and safety of the proposed fuel rod. The fixing group coils are configured to prevent any the axial displacement of the retaining spring inside the cladding, while the lower coil of the compensating group is polished to increase the contact area with the top of the fuel column, which increases the reliability and safety of the fuel rod of the present invention.

The fuel elements of the reactors WWER-440 and WWER-1000 modernized in terms of reducing the diameter relative to the specified prototypes of the fuel elements are known (see: DOUKHOVENSKI A S ET AL: "MODERNIZATION OF THE FUEL CHARACTERISTICS IF THE WWER-440 AND THE WWER-1000 TYPE REACTORS BY FUEL ROD DIAMETERS REDUCING", TOPFUEL. INTERNATIONAL TOPICAL MEETING, XX, XX, vol. 1, 9 June 1997 (1997-06-09), pages 256-264, XP000996730, document /7/). Known fuel rods for the WWER 440 reactor belong to a different field of technology than the fuel rod of a present invention, which is described herein as a modification of the fuel rod of the **WWER-1000** reactor.

Document /7/ describes the prototype fuel rod having an outer diameter of 9.1 mm, which is a known fact for the proposed fuel rod, and this parameter is taken from the same prototype. The modified fuel rod disclosed in /7/ has an outer diameter of 6.8 mm, which differs from the outer diameter of the proposed fuel rod.

The fuel element of the present invention comprises solid fuel pellets with an outer diameter of 7.77 to 7.83 mm, the fuel pellets of /7/ have a hole (of a radius 1.1 mm) and an outer radius of 3.76 mm, so its outer diameter is 7.52 mm which is smaller than the fuel rod of the present invention. The fuel pellet of the modified fuel element described in /7/, as well of the proposed fuel element, has no central hole, but the outer radius is 2.81 mm (accordingly, the outer diameter is 5.62 mm, which is less than the proposed fuel element). This modification of the present invention reduces the uranium intensity compared to the proposed fuel element.

The wall thickness of the fuel elements disclosed in /7/ is 0.650 mm or 0.480 mm, while in the proposed fuel element respective thickness is from 0.580 to 0.590 mm. The mass of fuel in /7/ is 1460 g or 890 g, and in the proposed fuel rod - from 1805 to 1845 g. The length of the fuel core in /7/ is 3550 mm, in the proposed fuel rod the total length of the fuel core is from 3671 to 3689 mm, with an upper and lower blanket zone in the proposed fuel element, which differs from the disclosure of /7/. The free volume of gas under the fuel element cladding according to /7/ is 11.54 cm³ or 6.44 cm³, while in the proposed fuel element respective volume is from 16.06 to 17.22 cm³. The target burnup is indicated in /7/ as 55-60 MW*day/kg U, and in the proposed fuel element - up to 68 MW*day/kg U.

The combination of the differences described above contributes in achieving the technical result of the present invention - an increase in the efficiency of a water-cooled power nuclear reactor due to increased energy production because of the higher specific uranium content of the proposed fuel element relative to those known and used in WWER-1000 reactors, with maintaining reliability and safe operation.

Furthermore, /7/ is silent about the use of a retaining spring comprising compensating group coils, buffer coils and fixing group coils. The use of a retaining spring in the fuel element of the present invention makes it possible to increase the reliability and safety of the fuel element.

A fuel rod for the core of a pressurized water reactor WWER 1000 is the closest one in terms of the technical essence and the result achieved (see V.D. Shmelev, Yu.G. Dragunov, V.P. Denisov, I.N. Vasilchenko. Cores of VVERs for Nuclear Power Plants. Moscow: ICC Akademkniga, 2004, p. 106 - /8/). It comprises the following parts: an upper end plug, a cladding, a lower end plug, a fuel column consisting of uranium dioxide pellets, and a retainer. The cladding and end plugs are made of E110 alloy. The inner volume of the fuel rod is filled with helium under the pressure of (2.00±0.25) MPa to prevent the cladding from crushing during operation. The fuel rod is sealed by welding. Compensatory space is provided in the upper section of the fuel rod to reduce the pressure of gaseous fission products under the cladding emitted in the course of operation. The fuel column is fixed by the retainer to protect it against the impact of any transportation and handling loads. The upper end plug ensures engagement with the grip of the fuel rod removal and installation device during the FA assembly. The lower end plug is installed into the bottom grid and fastened by splinting.

The disadvantage is that in the fuel rods of a WWER-1000 reactor, with a smaller length of the fuel column and greater thickness of the cylindrical cladding, the total fueling in the core is less, which leads to reduced power output of a WWER-1000 pressurized water reactor. The reduced fueling is due to the pellet geometry and the inner cladding diameter. Use of E110 alloy as the cladding material, which contains more hafnium than the high-purity E110 alloy, results in increased absorption of neutrons by the fuel rod cladding, which also reduces the energy yield of the reactor. Fastening of the lower end plug to the support grid by splinting results in more complicated and labor-intensive process of assembly and disassembly of fuel rods within the FA.

The object of the invention is to develop and create a new fuel element for a wwER-1000 pressurized water reactor with increased power generation and the same level of safety.

The technical result includes increase in the efficiency factor of a pressurized water reactor while maintaining the reliability and safe operation of the fuel element of a pressurized water reactor.

The technical result is achieved by the fuel rod of a water-cooled water-moderated nuclear reactor comprising a cladding (9) made of zirconium alloy in the form of a hollow cylinder with an outer diameter of 9.10±0.04 mm, containing inert gas; an upper plug (8) and a lower plug (1) welded concentrically to the top and the bottom ends of the cladding, respectively, configured to ensure sealing inside the fuel element; a fuel column disposed concentrically in the cladding and assembled of solid fuel pellets, the fuel pellets of the fuel column are made of uranium dioxide. The fuel column also comprises a retaining spring disposed concentrically in the cladding and being configured in the form of a cylindrical spring capable to press the fuel column against the lower plug (1) in the axial direction. The retaining spring comprises groups of coils arranged one after another from the top end of the cladding (9), namely compensating group coils configured to provide the required axial force for pressing the fuel column to maintain the fuel column integrity; buffer coils (6); and fixing group coils (5) configured to prevent the retaining spring from any axial displacement along the cladding. The length of the internal free space under the cladding between the lower surface of the upper plug (8) and the top of the fuel column is 256±9 mm. The cladding (9) has a length of 3946±1 mm, wall thickness of 0.585±0.05 mm, and is made of an alloy comprising 0.9 to 1.1 %wt niobium, 0.04 to 0.07 %wt iron, 0.07 to 0.01 oxygen, up to 0.05 %wt hafnium, the balance is zirconium and trace elements, or comprising 0.9 to 1.1 %wt niobium, 0.07 to 0.15 %wt iron, 0.1 to 0.15 oxygen, up to 0.01 %wt hafnium, the balance is zirconium and trace elements. Initial inert gas pressure inside the fuel element is 2.7±0.2 MPa. The fuel column is assembled from the solid fuel pellets, each of the pellets having a height of 11±1 mm, an outer diameter of 7.8±0.03 mm, with the total weight of all fuel pellets being 1825±20 g, the fuel column comprising an upper blanket part (2) having a length of 100±10 mm, an active part (3) having a length of 3380±9 mm, and a lower blanket part (4) having a length of 200±6 mm, arranged one after another. The fuel pellets of the active part (3) of the fuel column are made of uranium dioxide with from 0.1 to 5% wt. of Uranium-235, and the fuel pellets of the upper blanket part (2) and lower blanket parts (4) of the fuel column are made of uranium dioxide comprising less Uranium-235 than in the active part (3). The buffer coils (6) have a less pitch than the compensating group coils (7), wherein the lower coil of the compensating group (7) is polished to increase the contact area with the top of the fuel column. The length of the fuel element is 3978±2 mm. In one embodiment, the upper plug (8) and the lower plug (1) are made of zirconium alloy comprising 0.9 to 1.1 %wt niobium, up to 0.07 %wt iron, up to 0.01 oxygen, up to 0.05 %wt hafnium, the balance is zirconium and trace elements. The upper plug (8) and the lower plug (1) are welded to the cladding (9) by a butt resistance welding. The fuel element can contain at least 99% vol. of helium as the inert gas. The fuel pellets can have wells and chamfers on their ends.

The cladding can be made of E110 ultra-high purity or E110M zirconium alloy. The upper and the lower plugs can be made of E110 alloy. The upper and the lower plugs can be welded to the cladding using butt resistance welding. The fuel element can contain at least 99% of helium as inert gas. The fuel pellets can be made with wells and chamfers on the ends.

This combination of the features is new, unknown from the prior art, and solves the task set, since the increase in the outer diameter of the pellet and avoiding the central hole increases the total weight of the fuel in the core. The design calculations showed that a comparatively larger fuel load provides performance and reliability indicators similar to those of VVER1000 reactor fuel rods. Wherein, the use of ultra-high purity E110 alloy or E110M alloy as the cladding material reduces absorption of neutrons by the cladding due to decrease of hafnium content, which results in increased power yield.

The invention is illustrated by the following figures.
Fig. 1 shows the longitudinal section of a pressurized water reactor fuel element, where 1 - lower plug, 2 - fuel pellets of the upper blanket part of the fuel column, 3 - fuel pellets of the active part of the fuel column, 4 - fuel pellets of the lower blanket part of the fuel column, 5 - coils of the fixing group of retaining spring, 6 - buffer coils of the retaining spring, 7 - coils of the compensating group of the retaining spring, 8 - upper plug, 9 - fuel element cladding.

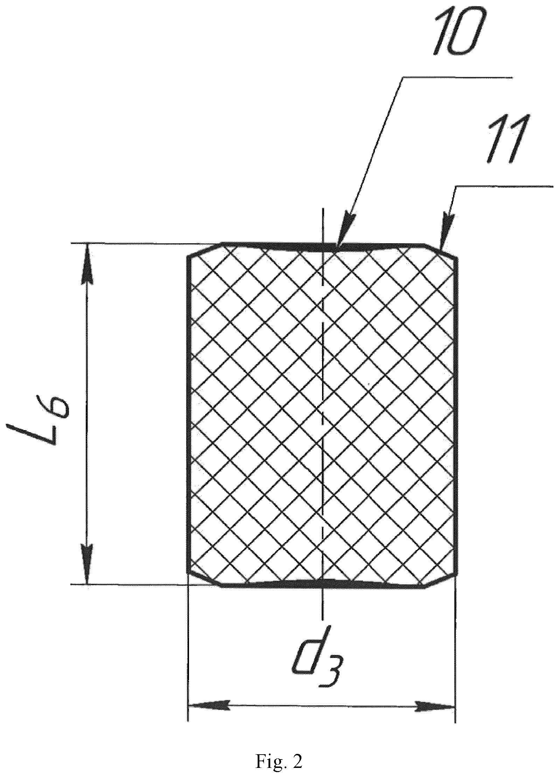

Fig. 2 shows the fuel pellet, where 10 - well, **11** - chamfers.
Fig. 3 shows the design value with uncertainty intervals of the maximum values of temperature in the fuel center in TBCA-T.mod.2 fuel rod as compared with the maximum permissible value.
Fig. 4 shows the design value with uncertainty intervals of the maximum values of gas pressure under TBCA-T.mod.2 fuel rod cladding as compared with the maximum permissible value.
Fig. 5 shows the design value with uncertainty intervals of the maximum values of circumferential stresses in TBCA-T.mod.2 fuel rod cladding as compared with the maximum permissible value.

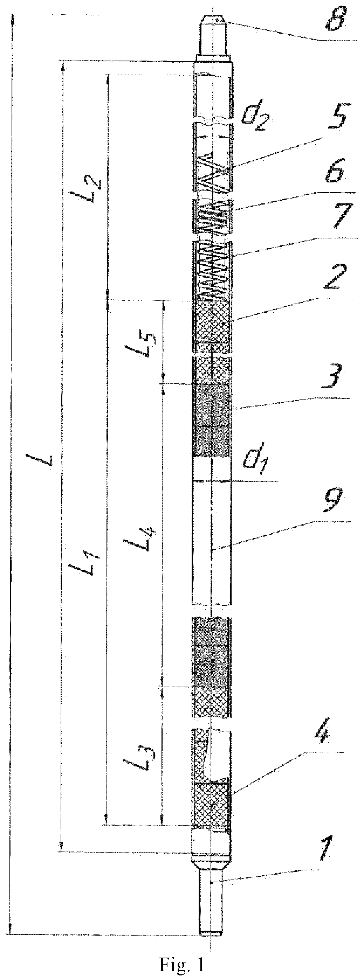

The fuel rod of a pressurized water reactor (Fig. 1) consists of the following structural components: a fuel column assembled from solid fuel pellets retaining spring, a cladding 9, an upper plug 8 and a lower plug 1. The fuel column has three parts - an upper blanket part 2, an active part 3, and a lower blanket part 4. The retaining spring has three parts - coils of a fixing group 5, buffer coils 6, and coils of a compensating group 7.

The fuel element cladding 9 is designed as a hollow cylinder. Length L of the cladding 9 is 3946±1 mm. The outer diameter of the cladding 9 is 9.10±0.04 mm, the wall thickness is 0.585±0.05 mm. The cladding 9 can be made of high-purity E110 or E110M zirconium alloy.

The use of E110 zirconium alloy is well known from the prior art for the manufacture of claddings and plugs of nuclear reactor fuel rods (Russian invention patents Nos. 2647127, 2124767, 2526856, 2170956, 2125305, 2381881, 2219599, Russian utility model patents Nos. 89904, 180840 etc.). Chemical composition of E110 zirconium alloy, %wt: 0.9-1.1 niobium, up to 0.07 iron, up to 0.01 oxygen, up to 0.05 hafnium, the balance is zirconium and trace elements (the composition known from Russian invention patents Nos. 2174565, 2688086).

Ultra-high purity alloy (" 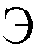 110 o. 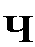 .") (also designated as "3110 opt.") is the E110 alloy, but with more stringent requirements for the chemical composition. "o. 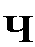 ." means "ultra-high purity" ("opt." - optimized). The main purpose of more stringent requirements is to reduce the maximum hafnium content from 0.05 to 0.01% wt. and to narrow the permissible range of oxygen content. The reduced content of hafnium compared to E110 alloy decreases neutron absorption by the cladding, which increases in the energy yield. The limited range of oxygen content results in a more stable corrosion resistance. Chemical composition of the ultra-high purity E110 zirconium alloy, %wt: niobium from 0.9 to 1.1, iron from 0.04 to 0.07, oxygen from 0.06 to 0.01, hafnium up to 0.01, the balance is zirconium and trace elements (the composition known from Russian invention patent No. 2700892; the thesis of V.A. Markelov, holder of an Advanced Doctorate in Engineering Sciences, Improvement of Composition and Structure of Zirconium Alloys to Ensure Operability of Fuel Elements, Fuel Assemblies And Pressure Tubes of Pressurized Water Reactor Cores with Extended Service Life and Fuel Burn-Up, 2010, https://www.dissercat.com/content/sovershenstvoyanie-sostava-i-struktury-splavov-tsirkoniya-v-obespechenie-rabotosposobnosti-t/read; articles by V.F. Konkov, V.A. Markelov, V.V. Novikov et al. Corrosion Model of Zirconium-Niobium Alloys in Pressurized Water Reactors, Nuclear Energy, v. 116, pub. 3, March 2014, p. 146-151).

E110M zirconium alloy known from the prior art can be also used as cladding material. E110M is a modification of the E110 alloy. Chemical composition of the ultra-high purity E110M zirconium alloy, %wt: niobium from 0.9 to 1.1, iron from 0.07 to 0.15, oxygen from 0.1 to 0.15, hafnium up to 0.01, the balance is zirconium and trace elements (the composition known from: the thesis of V.A. Belov, Ph.D. of Engineering Sciences, Failure Resistance of Modified Zirconium Alloys for Containment Pipes of Nuclear Reactors, 2011, https://misis.ru/files/2942/Belov_V.A.pdf; articles by A.V. Nikulina, V.A. Markelov, V.V. Novikov et al. E110M Zirconium Alloy for Cladding of Fuel Elementa of VVER-1000 and PWR Reactors, VANT. Series: Material Science and New Materials. Issue 4(95), 2018, p. 22-29, VNIINM JSC; articles by V.A. Konkov, V.A. Markelov, V.V. Novikov et al. Corrosion Model of Zirconium-Niobium Alloys in Pressurized Water Reactors, Nuclear Energy, v. 116, pub. 3, March 2014, p. 146-151). Hafnium content in the E110M alloy is the same as in the ultra-high purity E110. The advantage of using this alloy is an increase in strength due to higher iron content and an increase in cladding corrosion resistance due to higher oxygen content, as compared to using high-purity E110 alloy, which will further increase fuel element reliability during operation and increase fuel burn-up while maintaining functional capability.

The upper plug 8 is welded concentrically to the upper end of the cladding 9. The lower plug 1 is welded concentrically to the lower end of the cladding 9. Wherein the upper plug 8 and the lower plug 1 can be welded to the cladding 9 by butt resistance welding. The upper plug 8 and the lower plug 1 can be made of the E110 zirconium alloy. The chemical composition of the E110 alloy is known from the prior art and described above.

The upper plug 8 and the lower plug 1 with the cladding 9 ensure a tight cavity inside the fuel element with the initial inert gas pressure inside the cladding 9 equal to 2.7±0.2 MPa. Helium with a content of at least 99% can be used as inert gas. Inert gas is supplied to ensure corrosion resistance, fuel element strength and thermal conductivity.

A fuel column assembled of the fuel pellets is disposed concentrically in the cladding 9. Cylindrical fuel pellets are made solid, without a central hole, can be made with wells 10 on the pellets bases, and with chamfers 11 (bevels) on the ends.

The total weight of the fuel pellets is 1825±20 g, the outer diameter d₃ of each pellet is 7.8±0.03 mm, the length (height) of each fuel pellet L₆ is 11±1 mm.

The lower fuel pellet contacts the lower plug 1 with its lower end, the upper fuel pellet contacts the retaining spring.

The fuel column consists of groups of fuel pellets arranged one after another - an upper blanket part 2, an active part 3, and a lower blanket part 4 of the fuel column. A length L₅ of the upper blanket part 2 is 100±10 mm, a length L₄ of the active part 3 is 3380±9 mm, and a length L₃ of the lower blanket part 4 is 200±6 mm. Thus, the total length of the fuel column L₁ is 3680±9 mm.

The fuel pellets are made of uranium dioxide UO₂, wherein different parts of the fuel column vary in Uranium-235 enrichment based on the required relation for the estimated fueling. In particular, the fuel pellets of the active part 3 of the fuel column are made of uranium dioxide with 0.1 to 5% wt. Uranium-235, and the fuel pellets of the upper 2 and the lower 4 blanket parts of the fuel column are made of uranium dioxide with less Uranium-235 than in the active part.

Thus, the mass of the fuel is increased, and, therefore, the fueling of the reactor core is increased - due to the lack of a central hole in the pellet, due to increased outer diameter of the pellet and increased inner diameter of the cladding as compared with the known engineering solutions.

The retaining spring (see Fig. 1) is disposed concentrically in the cladding 9 and made in the form of a cylindrical spring configured to press the fuel column against the lower end plug 1 in the axial direction. The coils of the compensating group 7, buffer coils 6 and coils of the fixing group 5 of the retaining spring are arranged bottom-up from the top of the fuel column.

The coils of the compensating group 7 are configured to provide the required axial force for pressing the fuel column to maintain the integrity of the fuel column. The coil of the compensating group 7 in contact with the upper fuel pellet is pressed and polished to some extent to increase the contact area with the top end of the fuel column.

The buffer coils 6 have a reduced pitch compared with the coils of the compensating group 7.

The coils of the fixing group 5 are configured to prevent the retaining spring from any axial displacement along the cladding.

A length L₂ of the internal free space under the cladding 9 between the lower surface of the upper plug 8 and the top of the fuel column (more particularly, the top of the upper blanket part 2 of the fuel column) is 256±9 mm.

A length L₀ of the fuel element is 3978±2 mm.

The fuel element of a pressurized water nuclear reactor is located within the fuel assembly in the reactor core vertically in the flow of coolant which functions as a moderator of fast neutrons required for Uranium-235 fission and thermal energy output.

The main purpose of the fuel element in the pressurized water reactor is to transfer the heat released from Uranium-235 fission in the fuel pellet to the coolant through the cylindrical cladding, eliminating direct contact between the fuel pellets and the coolant, which is to ensure reliable and safe operation of the nuclear power reactor. Therefore, the more Uranium-235 is in the fuel pellets, the higher number of nuclear fissions can occur, an energy can be transferred to the coolant, and electricity can be generated.

The fuel element of a pressurized water reactor operates as follows.

The lower plug 1 is welded to the zirconium alloy cladding 3, for example, by inert gas butt resistance welding, providing a tight joint in the lower part of the fuel element. Ultra-high purity E110 alloy is used as zirconium alloy (%wt: niobium from 0.9 to 1.1, iron from 0.04 to 0.07, oxygen from 0.07 to 0.01, hafnium up to 0.01, the balance is zirconium and trace elements) or E110M alloy (%wt: niobium from 0.9 to 1.1, iron from 0.07 to 0.15, oxygen from 0.1 to 0.15, hafnium up to 0.01, the balance is zirconium and trace elements).

Solid uranium dioxide pellets are placed in the cladding 3. Wherein the fuel pellets of the active part 3 of the fuel column are made of uranium dioxide with Uranium-235 in the range of from 0.1 to 5% wt, and the fuel pellets of the upper part 2 and the lower part 4 of the blanket are made of uranium dioxide with less Uranium-235 than in the active part 3. The fuel column weight is selected within the range of from 1805 to 1845 g, and such increased aggregate fuel loading in the core increases energy efficiency and fuel burn-up.

During fuel element manufacturing, the retaining spring presses the fuel column against the lower end plug 1 in the axial direction by force ensuring maintenance of the fuel column integrity. The coils of the compensating group of the retaining spring 7 provide the axial force for pressing the fuel column. The coils of the fixing group 5 of the retaining spring prevent it from any axial displacement along the cladding 3. The coils of the fixing group 5 of the retaining spring inside the cladding 9 are secured by force fitting onto the inner surface of the cladding 9. The buffer coils 6 provide the proper installation of the retaining spring in the fuel element, wherein the coils of compensating group 7 are not damaged due to installation force.

When welding the upper plug 8 to the cladding 3, after air is pumped from the free volume under the cladding, pressurized gas, for example, helium with a content of at least 99%, is supplied, and the upper welded joint is sealed, for example, by butt resistance welding.

The upper plug 8 and the lower plug 1 can be made of E110 zirconium alloy (E110 chemical composition, %wt: niobium from 0.9 to 1.1, iron up to 0.07, oxygen up to 0.01, hafnium up to 0.05, the balance is zirconium and trace elements).

The fuel elements formed as described above are assembled into fuel assemblies to be loaded into the nuclear reactor core.

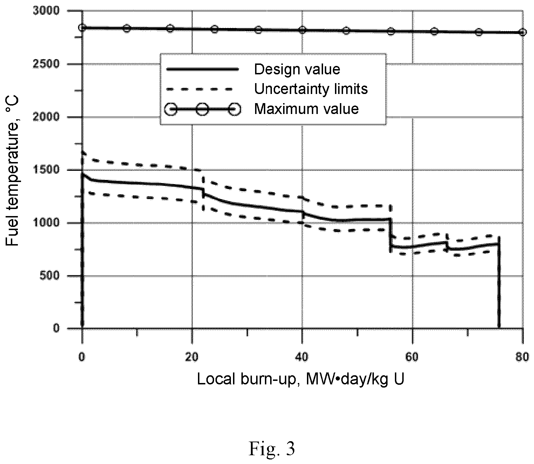

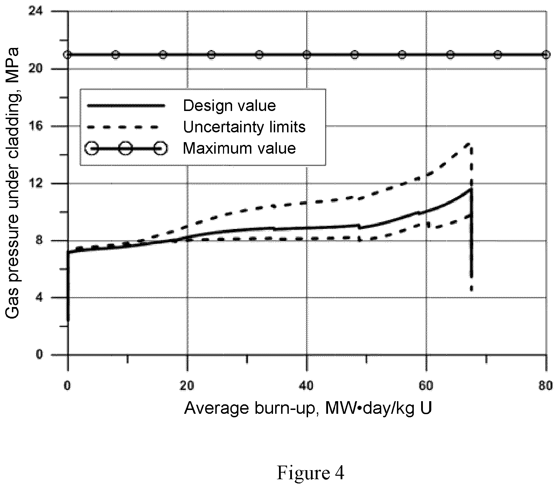

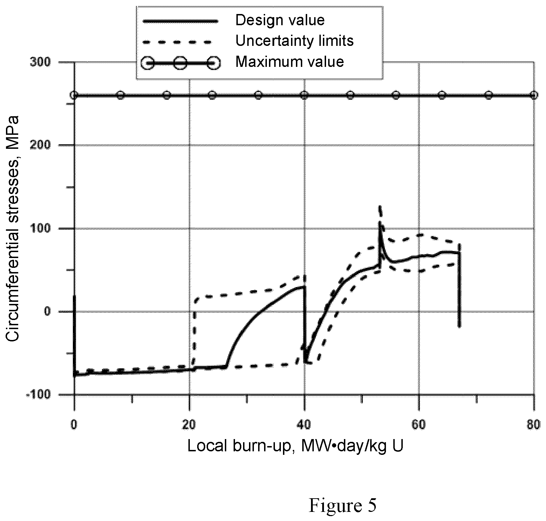

Dependences of the maximum values of fuel temperature, gas pressure under the cladding, circumferential stresses from the local burnup were calculated for the fuel element of a pressurized water reactor according to the invention (Fig. 3, 4, 5). The dependencies show that the maximum values are below the limit values, considering the uncertainty limits, which suggests that the reliability and safe operation of the fuel element of a pressurized water reactor is maintained.

Thus, the invention ensures:
- increase in the efficiency factor of a pressurized water reactor by increasing the energy output due to increased load of fuel weighing 1.805 to 1.845 kg, unlike e.g. /3/, where the fuel weight is from 0.93 to 1.52 kg, which is achieved by increasing the fuel column length, reducing the cylindrical cladding thickness (respectively, increasing the inner diameter of the cylinder cladding), and using fuel pellets without a central hole,
- increase in the efficiency factor of a pressurized water reactor by increasing the energy output due to reduced amount of hafnium in the cylindrical cladding material (high-purity E110 or E110M), which absorbs neutrons required for Uranium-235 fission, unlike e.g. the material of E110 cylindrical cladding, where hafnium content is greater (known from /8/),
- increase in design margins in strength analyses and increase of corrosion resistance during operation when using promising E110M alloy,
- easier technology of fuel element manufacturing compared with the existing one (known, for example, from /3/) due to the lack of need to correct the manufacturing procedure of all structural components of a fuel element,
- maintained reliability and safe operation of a fuel element of a pressurized water reactor confirmed by design analysis given above.

## Claims

1. A fuel rod of a water-cooled water-moderated nuclear reactor, comprising:
a cladding (9) made of zirconium alloy in the form of a hollow cylinder having a length of 3946±1 mm containing an inert gas,
an upper plug (8) and a lower plug (1) welded concentrically to the top and the bottom ends of the cladding (9), respectively, configured to ensure sealing inside the fuel element,
a fuel column arranged concentrically in the cladding (9) and assembled from fuel pellets made of uranium dioxide,
a retaining spring disposed concentrically in the cladding (9) and configured in the form of a cylindrical spring capable to press the fuel column against the lower plug (1) in the axial direction, the retaining spring comprised of parts arranged one after another from the top of the fuel column, namely:
compensating group coils (7) configured to provide the required axial force for pressing the fuel column to maintain the fuel column integrity,
buffer coils (6), and
fixing group coils (5) configured to prevent any the axial displacement of the retaining spring inside the cladding (9),
wherein the length of the internal free space under the cladding between the lower surface of the upper plug (8) and the top of the fuel column is 256±9 mm,
**characterized in that**
the cladding (9) has a length of 3946±1 mm, wall thickness of 0.585±0.05 mm, and is made of an alloy comprising 0.9 to 1.1 %wt niobium, 0.04 to 0.07 %wt iron, 0.07 to 0.01 oxygen, up to 0.05 %wt hafnium, the balance is zirconium and trace elements, or comprising 0.9 to 1.1 %wt niobium, 0.07 to 0.15 %wt iron, 0.1 to 0.15 oxygen, up to 0.01 %wt hafnium, the balance is zirconium and trace elements;
initial inert gas pressure inside the fuel element is 2.7±0.2 MPa;
the fuel column is assembled from the solid fuel pellets, each of the pellets having a height of 11±1 mm, an outer diameter of 7.8±0.03 mm, with the total weight of all fuel pellets being 1825±20 g, the fuel column comprising an upper blanket part (2) having a length of 100±10 mm, an active part (3) having a length of 3380±9 mm, and a lower blanket part (4) having a length of 200±6 mm, arranged one after another,
wherein the fuel pellets of the active part (3) of the fuel column are made of uranium dioxide with from 0.1 to 5% wt. of Uranium-235, and the fuel pellets of the upper blanket part (2) and lower blanket part (4) of the fuel column are made of uranium dioxide comprising less Uranium-235 than in the active part (3),
wherein the buffer coils (6) have a less pitch than the compensating group coils (7),
wherein the lower coil of the compensating group (7) is polished to increase the contact area with the top of the fuel column,
and the length of the fuel element is 3978±2 mm.

2. The fuel element according to claim 1, wherein the upper plug (8) and the lower plug (1) are made of zirconium alloy comprising 0.9 to 1.1 %wt niobium, up to 0.07 %wt iron, up to 0.01 oxygen, up to 0.05 %wt hafnium, the balance is zirconium and trace elements.

3. The fuel element according to claim 1, wherein the upper plug (8) and the lower plug (1) are welded to the cladding (9) by a butt resistance welding.

4. The fuel element according to claim 1, wherein the fuel element contains at least 99% vol. of helium as the inert gas.

5. The fuel element according to claim 1, wherein the fuel pellets have wells and chamfers on their ends.

## Patentansprüche

1. Ein Brennstab für einen wassergekühlten und wassermoderierten Kernreaktor, bestehend aus:
einer Brennstabhülle (9) aus einer Zirkoniumlegierung in Form eines Hohlzylinders mit einer Länge von 3946±1 mm, der ein Inertgas enthält,
einen oberen Stopfen (8) und einen unteren Stopfen (1), die konzentrisch jeweils an das obere bzw. untere Ende der Brennstabhülle (9) geschweißt sind und so konfiguriert sind, dass sie eine Abdichtung innerhalb des Brennelements gewährleisten,
eines konzentrisch in der Brennstabhülle (9) angeordneten Brennstoffkerns und aus Brennstoffpellets aus Urandioxid zusammengesetzt,
eine konzentrisch in der Brennstabhülle (9) angeordnete Haltefeder in Form einer Zylinderfeder, die den Brennstoffkern in axialer Richtung gegen den unteren Stopfen (1) drücken kann, wobei die Haltefeder aus von der Oberseite des Brennstoffkerns aus nacheinander angeordneten Teilen besteht, nämlich:
Kompensationsgruppenspulen (7), die so ausgeführt sind, dass sie die erforderliche axiale Kraft zum Pressen des Brennstoffkerns bereitstellen, um die Integrität des Brennstoffkerns aufrechtzuerhalten,
Pufferspulen (6) und
Befestigungsgruppenspulen (5), die so ausgeführt sind, dass sie eine axiale Verschiebung der Haltefeder innerhalb der Brennstabhülle (9) verhindern,
wobei die Länge des inneren freien Raums unter der Brennstabhülle zwischen der Unterseite des oberen Stopfens (8) und der Oberseite des Brennstoffkerns 256±9 mm beträgt, **dadurch gekennzeichnet, dass**
die Brennstabhülle (9) hat eine Länge von 3946±1 mm, eine Wandstärke von 0,585±0,05 mm und besteht aus einer Legierung mit 0,9 bis 1,1 Gew.-% Niob, 0,04 bis 0,07 Gew.-% Eisen, 0,07 bis 0,01 Sauerstoff, bis zu 0,05 Gew.-% Hafnium, der Rest Zirkonium und Spurenelemente sind, oder mit 0,9 bis 1,1 Gew.-% Niob, 0,07 bis 0,15 Gew.-% Eisen, 0,1 bis 0,15 Sauerstoff, bis zu 0,01 Gew.-% Hafnium, der Rest Zirkonium und Spurenelemente sind;
der Anfangsdruck des Inertgases im Brennelement beträgt 2,7 ± 0,2 MPa;
der Brennstoffkern ist aus den festen Brennstoffpellets zusammengesetzt, wobei jedes Pellet eine Höhe von 11 ± 1 mm und einen Außendurchmesser von 7,8 ± 0,03 mm aufweist, wobei das Gesamtgewicht aller Brennstoffpellets 1825 ± 20 g beträgt. Der Brennstoffkern besteht aus einem oberen Brutmantelteil (2) mit einer Länge von 100±10 mm, einem Aktivteil (3) mit einer Länge von 3380±9 mm und einem unteren Brutmantelteil (4) mit einer Länge von 200±6 mm, die nacheinander angeordnet sind,
wobei die Brennstoffpellets des aktiven Teils (3) des Brennstoffkerns aus Urandioxid mit 0,1 bis 5 Gew.-% Uran-235 bestehen und die Brennstoffpellets des oberen Brutmantelteils (2) und des unteren Brutmantelteils (4) des Brennstoffkerns aus Urandioxid bestehen, das weniger Uran-235 enthält als im aktiven Teil (3),
wobei die Pufferspulen (6) eine geringere Steigung aufweisen als die Kompensationsgruppenspulen (7),
wobei die untere Spule der Kompensationsgruppe (7) poliert ist, um die Kontaktfläche mit der Oberseite des Brennstoffkerns zu vergrößern,
und die Länge des Brennelements beträgt 3978±2 mm.

2. Das Brennelement nach Patentanspruch 1, wobei der obere Stopfen (8) und der untere Stopfen (1) aus Zirkalloy bestehen mit 0,9 bis 1,1 Gew.-% Niob, bis zu 0,07 Gew.-% Eisen, bis zu 0,01 Gew.-% Sauerstoff, bis zu 0,05 Gew.-% Hafnium, wobei der Rest Zirkonium und Spurenelemente sind.

3. Das Brennelement nach Patentanspruch 1, wobei der obere Stopfen (8) und der untere Stopfen (1) durch eine Stumpfwiderstandsschweißung mit der Brennstabhülle (9) geschweißt sind.

4. Das Brennelement nach Patentanspruch 1, wobei das Brennelement mindestens 99 Vol.-% Helium als Inertgas enthält.

5. Das Brennelement nach Patentanspruch 1, wobei die Brennstoffpellets Vertiefungen und Fasen an den Enden haben.

## Revendications

1. Élément combustible d'un réacteur nucléaire à eau pressurisée, comportant :
une gaine (9) en alliage de zirconium sous forme d'un cylindre creux d'une longueur de 3946±1 mm contenant un gaz inerte,
un bouchon supérieur (8) et un bouchon inférieur (1) soudés concentriquement aux extrémités supérieure et inférieure de la gaine (9), respectivement, conçus pour assurer l'étanchéité à l'intérieur de l'élément combustible,
une colonne de combustible disposée concentriquement dans la gaine (9) et constituée par des pastilles de combustible de dioxyde d'uranium,
un ressort de maintien disposé concentriquement dans la gaine (9) et conçu sous forme d'un ressort cylindrique susceptible de presser la colonne de combustible contre le bouchon inférieur (1) dans la direction axiale, le ressort de maintien étant constitué par des parties disposées les unes après les autres à partir du haut de la colonne de combustible, à savoir :
spires de groupe de compensation (7) conçues pour fournir la force axiale requise pour presser la colonne de combustible afin de maintenir l'intégrité de la colonne de combustible,
spires de tampon (6), et
spires de groupe de fixation (5) conçues pour empêcher tout déplacement axial du ressort de maintien à l'intérieur de la gaine (9),
dans lequel la longueur de l'espace libre interne sous la gaine entre la surface inférieure du bouchon supérieur (8) et le haut de la colonne de combustible est de 256 ± 9 mm, **caractérisée en ce que**
la gaine (9) a une longueur de 3946±1 mm, une épaisseur de paroi de 0,585±0,05 mm, et est constituée d'un alliage comprenant 0,9 à 1,1 % en poids de niobium, 0,04 à 0,07 % en poids de fer, 0,07 à 0,01 % en poids d'oxygène, jusqu'à 0,05 % en poids d'hafnium, le reste étant du zirconium et des oligo-éléments, ou comprenant 0,9 à 1,1 % en poids de niobium, 0,07 à 0,15 % en poids de fer, 0,1 à 0,15 % en poids d'oxygène, jusqu'à 0,01 % en poids d'hafnium, le reste étant du zirconium et des oligo-éléments ;
la pression initiale du gaz inerte à l'intérieur de l'élément combustible est de 2,7 ± 0,2 MPa ;
la colonne de combustible est assemblée à partir de pastilles de combustible solide, chacune des pastilles ayant une hauteur de 11±1 mm, un diamètre extérieur de 7,8±0,03 mm, le poids total de toutes les pastilles de combustible étant de 1825±20 g, la colonne de combustible comprenant une partie de couverture supérieure (2) ayant une longueur de 100±10 mm, une partie active (3) ayant une longueur de 3380±9 mm, et une partie de couverture inférieure (4) ayant une longueur de 200±6 mm, disposées l'une après l'autre,
dans lequel les pastilles de combustible de la partie active (3) de la colonne de combustible sont constituées de dioxyde d'uranium contenant de 0,1 à 5 % en poids d'uranium 235, les pastilles de combustible de la partie de couverture supérieure (2) et de la partie de couverture inférieure (4) de la colonne de combustible sont constituées de dioxyde d'uranium contenant moins d'uranium 235 que dans la partie active (3),
dans lequel les spires de tampon (6) ont un pas inférieur à celui des spires de groupe de compensation (7),
dans lequel la spire inférieure du groupe de compensation (7) est polie pour augmenter la surface de contact avec le haut de la colonne de combustible,
et la longueur de l'élément combustible est de 3978±2 mm.

2. Elément combustible selon la revendication 1, dans lequel le bouchon supérieur (8) et le bouchon inférieur (1) sont constitués d'un alliage de zirconium comprenant 0,9 à 1,1 % en poids de niobium, jusqu'à 0,07 % en poids de fer, jusqu'à 0,01 % en poids d'oxygène, jusqu'à 0,05 % en poids d'hafnium, le reste étant du zirconium et des oligo-éléments.

3. Elément combustible selon la revendication 1, dans lequel le bouchon supérieur (8) et le bouchon inférieur (1) sont soudés à la gaine (9) par un soudage bout à bout par résistance.

4. Elément combustible selon la revendication 1, dans lequel l'élément combustible contient au moins 99 % vol. d'hélium comme gaz inerte.

5. Elément combustible selon la revendication 1, dans lequel les pastilles de combustible ont des évidements et des chanfreins à leurs extrémités.
